# FASCICULE DE BREVET EUROPEEN

(11) **EP 3 374 211 B1**
(45) Date de publication et mention de la délivrance du brevet: **31.07.2019**
(21) Numéro de dépôt: 16790665.0
(22) Date de dépôt: 05.10.2016
(51) Int. Cl.: B60G 13/00, F16F 9/32, F16F 9/38, F16F 9/54

(54) **DISPOSITIF D'AIDE AMOVIBLE, POUR L'INSTALLATION ET LE CONDITIONNEMENT D'UN AMORTISSEUR DE TRAIN DE VÉHICULE**
ENTFERNBARE HILFSVORRICHTUNG ZUM INSTALLIEREN UND KONDITIONIEREN EINES STOSSDÄMPFER EINER FAHRZEUGACHSE
REMOVABLE ASSISTANCE DEVICE, FOR INSTALLING AND CONDITIONING A SHOCK ABSORBER OF A VEHICLE AXLE

(30) Priorité: 09.11.2015 FR 1560689
(43) Date de publication de la demande: 19.09.2018
(73) Titulaire: PSA Automobiles SA, 78300 Poissy (FR)
(72) Inventeur: MULLER, Jerome, 25600 Nommay (FR); LE COSQUER, Yannick, 25350 Mandeure (FR)
(86) Numéro de dépôt international: PCT/FR2016/052555
(87) Numéro de publication internationale: WO 2017/081376

(56) Documents cités:
- WO-A1-2016/055706
- DE-A1-102011 012 371
- FR-A1- 3 026 059

## Description

L'invention concerne certains amortisseurs destinés à équiper un train de véhicule, et plus précisément le conditionnement de ces amortisseurs avant qu'ils ne soient installés dans des véhicules et leur installation.

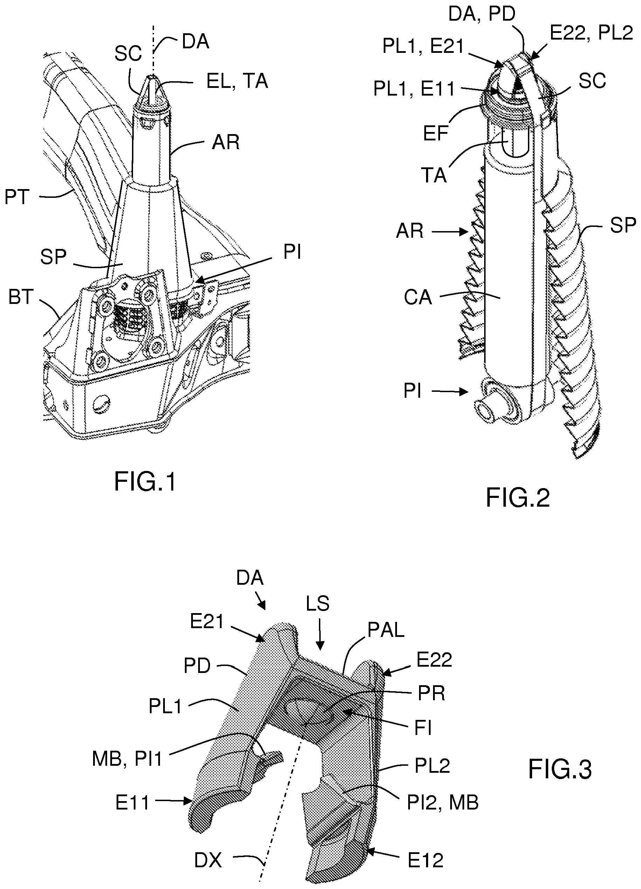

Comme illustré sur la figure 1, certains véhicules, éventuellement de type automobile, comprennent un train (généralement arrière) comportant une partie transversale (ou traverse) PT à laquelle est solidarisé fixement au moins un bras BT muni d'extrémités propres à être solidarisées à des parties structurelles. L'une des extrémités de ce bras BT est destinée à permettre la solidarisation d'un moyen de support d'une roue (généralement arrière) et la partie inférieure PI d'un amortisseur AR d'une suspension.

Certains de ces amortisseurs AR comprennent, d'une première part, un corps logeant en translation une tige TA ayant une extrémité libre EL munie d'un filetage qui est propre à permettre sa solidarisation à la caisse d'un véhicule, d'une deuxième part, un embout de filtrage EF monté coulissant sur la tige TA, et, d'une troisième part, un soufflet de protection SP entourant le corps CA et couplé à l'embout de filtrage EF, généralement par clippage une fois que l'amortisseur AR a été fixé sur le bras de la traverse BT.

Une fois que ce type d'amortisseur AR a été fabriqué il est conditionné au moyen d'une sangle SC afin d'occuper moins de place pendant son stockage et son transport (sans le soufflet de protection SP). Plus précisément, cette sangle SC maintient la tige TA dans une position rétractée par rapport au corps CA, en constituant une boucle qui longe le corps de l'amortisseur AR sous le soufflet SP en immobilisant l'embout de filtrage EF par rapport à l'extrémité libre EL de la tige TA, et passe par l'extrémité inférieure du corps et par la face avant de l'extrémité libre EL de la tige TA.

Lorsque l'on constitue le train, un technicien se saisit d'un amortisseur AR conditionné par sa sangle SC, puis solidarise la partie inférieure PI de cet amortisseur AR à l'extrémité associée d'un bras BT de ce train, comme illustré sur la figure 1. Le technicien vient ensuite coiffer le soufflet de protection SP sur l'amortisseur AR monté et fixe ce soufflet de protection SP en partie inférieure sur la traverse BT et en partie supérieure sur l'embout de filtrage EF.

Une fois que le train a été constitué, il est rapproché de la caisse d'un véhicule lors d'une opération dite « de coiffage de caisse ». Pendant cette opération, on libère la remontée de la tige TA (l'amortisseur AR étant sous pression) en coupant la sangle SC. Cette opération libère la tige TA et donc lui permet de gagner progressivement une position non rétractée adaptée à sa solidarisation. L'extrémité libre EL de la tige TA de chaque amortisseur AR du train monte alors au travers de trous dédiés de la caisse, en vue de sa solidarisation au moyen d'écrous.

Afin que la sangle SC ne demeure pas bloquée entre l'embout de filtrage EF et le soufflet, on doit retirer la sangle SC du bas PI de l'amortisseur AR monté. Mais ce retrait soudain a également pour conséquence de libérer l'ensemble (embout de filtrage EF et soufflet de protection SP), qui était jusqu'alors comprimé. Il en résulte une remontée quasi-instantanée de l'embout de filtrage EF et du soufflet de protection SP le long de l'extrémité libre EL de la tige TA, à une vitesse supérieure à celle de la tige TA (effet ressort du soufflet). L'embout de filtrage EF ou une partie du soufflet de protection SP peut alors se retrouver placé(e) en travers devant la face avant de l'extrémité libre EL de la tige TA, ce qui peut empêcher la traversée du trou dédiée par cette extrémité libre EL et/ou endommager l'embout de filtrage EF ou le soufflet de protection SP. Dans l'un et/ou l'autre cas la durée d'assemblage du véhicule est augmentée et nécessite une retouche importante.

Par ailleurs, lorsque ni l'embout de filtrage EF ni le soufflet de protection SP ne se retrouvent placés en travers devant la face avant de l'extrémité libre EL de la tige TA, le trou dédié peut se retrouver très légèrement décalé axialement par rapport à l'extrémité libre EL de la tige TA, ce qui empêche la poursuite de la solidarisation du train à la caisse. Pour éviter que cela ne se produise, on est contraint de prévoir un technicien pour positionner précisément l'extrémité libre EL de la tige TA dans l'axe du trou dédié de la caisse, ce qui est onéreux et fastidieux, et peut engendrer une casse d'une éventuelle pièce de calage couplée à l'embout de filtrage EF si ce dernier est décentré.

L'invention a donc notamment pour but d'améliorer la situation.

Elle propose notamment à cet effet un dispositif d'aide propre à équiper temporairement un amortisseur qui est destiné à équiper un train de véhicule et qui comprend, d'une première part, un corps logeant en translation une tige ayant une extrémité libre munie d'un filetage propre à permettre sa solidarisation à une caisse du véhicule et maintenue dans une position rétractée par rapport au corps par une sangle, d'une deuxième part, un embout de filtrage monté coulissant sur la tige, et, d'une troisième part, un soufflet de protection entourant le corps et couplé à l'embout de filtrage.

Ce dispositif d'aide se caractérise par le fait qu'il comprend une pièce comportant au moins une première extrémité propre à appuyer sur l'embout de filtrage et des moyens de blocage qui sont propres à coopérer avec le filetage pour immobiliser par rapport à l'extrémité libre de la tige la pièce, l'embout de filtrage et le soufflet de protection avant et après un retrait de la sangle.

Cela permet d'éviter le risque de mauvais montage ou d'endommagement de l'embout de filtrage, et de faciliter le conditionnement des amortisseurs.

Le dispositif d'aide selon l'invention peut comporter d'autres caractéristiques qui peuvent être prises séparément ou en combinaison, et notamment :
- ses moyens de blocage peuvent comprendre deux pattes inclinées de façons opposées afin que des extrémités libres qu'elles comprennent respectivement viennent s'appuyer sur un filet du filetage pour immobiliser la pièce par rapport à l'extrémité libre de la tige ;
   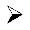 les pattes inclinées peuvent être placées sensiblement l'une en face de l'autre de manière à s'appuyer sur le filet en deux zones diamétralement opposées par rapport à une direction axiale de la tige ;
- la pièce peut comprendre, d'une part, deux parois latérales propres à entourer deux zones de l'extrémité libre de la tige qui sont diamétralement opposées par rapport à une direction axiale de la tige, et comprenant chacune une première extrémité, une seconde extrémité opposée à la première extrémité qui est propre à appuyer sur l'embout de filtrage, et une face interne munie des moyens de blocage, et, d'autre part, une paroi de liaison reliant entre elles les secondes extrémités des parois latérales ;
   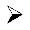 la paroi de liaison peut être propre à être placée contre une partie terminale de l'extrémité libre de la tige et à définir une surface d'appui, centrée par rapport à la direction axiale, pour la sangle ;
      - les secondes extrémités peuvent s'étendre au-delà de la paroi de liaison afin de définir des butées latérales pour la sangle ;
   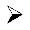 la paroi de liaison peut comprendre une face interne destinée à être orientée vers la partie terminale de l'extrémité libre de la tige et comprenant une protubérance propre à être logée étroitement dans un logement ouvert qui est défini dans la partie terminale de l'extrémité libre de la tige, afin de permettre un positionnement de la pièce dans une position centrée par rapport à l'extrémité libre de la tige ;
      - la protubérance peut être semi-sphérique ;
   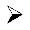 les parois latérales peuvent être inclinées de façon opposées en ayant leurs secondes extrémités espacées d'une distance qui est strictement inférieure à une distance séparant leurs premières extrémités de manière à guider le passage de la tige au travers d'un trou dédié défini dans la caisse en vue de sa solidarisation à cette dernière.

L'invention propose également un amortisseur destiné à équiper un train de véhicule et comprenant, d'une première part, un corps logeant en translation une tige ayant une extrémité libre munie d'un dispositif d'aide du type de celui présenté ci-avant et d'un filetage propre à permettre sa solidarisation à une caisse du véhicule et maintenue dans une position rétractée par rapport audit corps par une sangle, d'une deuxième part, un embout de filtrage monté coulissant sur la tige, et, d'une troisième part, un soufflet de protection entourant le corps et couplé à l'embout de filtrage.

D'autres caractéristiques et avantages de l'invention apparaîtront à l'examen de la description détaillée ci-après, et des dessins annexés (obtenus en CAO/DAO (« Conception Assistée par Ordinateur/Dessin Assisté par Ordinateur »), d'où le caractère apparemment discontinu de certaines lignes et les niveaux de gris), sur lesquels :
- la figure 1 illustre schématiquement, dans une vue en perspective, un exemple de traverse et de bras d'un train arrière de véhicule comprenant un amortisseur conditionné de l'art antérieur, avant le coiffage de caisse,
- la figure 2 illustre schématiquement, dans une vue en perspective, un exemple d'amortisseur conditionné avec un exemple de réalisation d'un dispositif d'aide selon l'invention et avec une partie de son soufflet de protection,
- la figure 3 illustre schématiquement, dans une vue en perspective, un exemple de réalisation d'un dispositif d'aide selon l'invention,
- la figure 4 illustre schématiquement, dans une vue en perspective, la partie supérieure de l'amortisseur conditionné de la figure 2, avec le dispositif d'aide de la figure 3,
- la figure 5 illustre schématiquement, dans une vue partiellement en coupe, une portion de la partie supérieure de l'amortisseur conditionné de la figure 4,
- la figure 6 illustre schématiquement, dans une vue en perspective, une portion de la partie supérieure de l'amortisseur conditionné de la figure 4, après le retrait de la sangle et pendant la traversée d'un trou dédié d'une représentation d'une partie d'une caisse de véhicule, et
- la figure 7 illustre schématiquement, dans une vue en perspective, une portion de la partie supérieure de l'amortisseur conditionné de la figure 4, après la traversée du trou dédié d'une partie de la caisse d'un véhicule, et pendant le retrait du dispositif d'aide.

L'invention a notamment pour but de proposer un dispositif d'aide DA destiné à équiper temporairement un amortisseur AR devant faire partie d'un train de véhicule.

Dans ce qui suit, on considère, à titre d'exemple non limitatif, que les véhicules sont de type automobile. Il s'agit par exemple de voitures. Mais l'invention n'est pas limitée à ce type de véhicule. Elle concerne en effet tout véhicule comportant au moins un train comprenant au moins deux amortisseurs de suspension.

Par ailleurs, on considère dans ce qui suit, à titre d'exemple non limitatif, que les amortisseurs AR sont destinés à équiper des trains arrière de véhicule. Mais cela n'est pas obligatoire. Ils pourraient en effet équiper des trains avant.

On a schématiquement représenté sur la figure 2 un exemple de réalisation non limitatif d'un amortisseur conditionné AR comprenant un exemple de réalisation d'un dispositif d'aide DA selon l'invention.

On entend ici par « amortisseur conditionné » un amortisseur ayant une longueur temporairement réduite par une sangle SC afin d'occuper moins de place pendant son stockage, son transport et une partie de sa solidarisation à un véhicule.

Comme illustré sur la figure 2, cet amortisseur (conditionné) AR comprend au moins un corps CA, une tige TA, un embout de filtrage EF, un soufflet de protection SP, et un dispositif d'aide DA selon l'invention.

Le corps CA loge, en translation suivant une direction axiale DX, la tige TA. A l'instar de ce qui est illustré sur la figure 1 de l'art antérieur, il comprend une partie inférieure PI destinée à être solidarisée fixement (tout comme un moyen de support de roue) à une extrémité d'un bras BT qui est lui-même solidarisé fixement à une partie transversale (ou traverse) PT d'un train (ici arrière) de véhicule. Ce bras BT est destiné à être solidarisé via ses extrémités à des parties structurelles du véhicule.

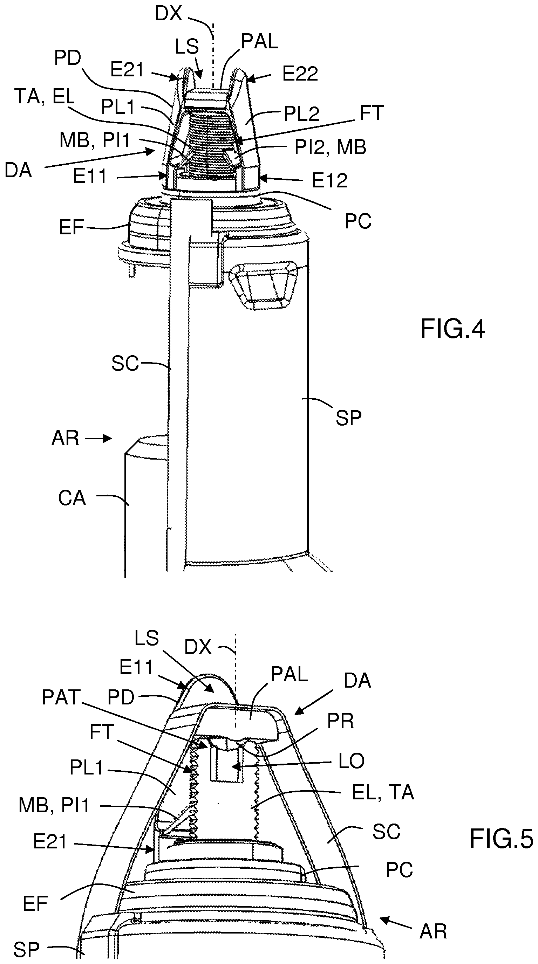

Comme illustré sur les figures 4 à 7, la tige TA comprend une extrémité libre EL qui est munie d'un filetage FT propre à permettre sa solidarisation à la caisse CV du véhicule, par exemple au moyen d'un écrou. Elle comprend également une extrémité interne (non représentée), opposée à son extrémité libre EL et solidarisée fixement à un piston logé dans le corps CA (et non représenté).

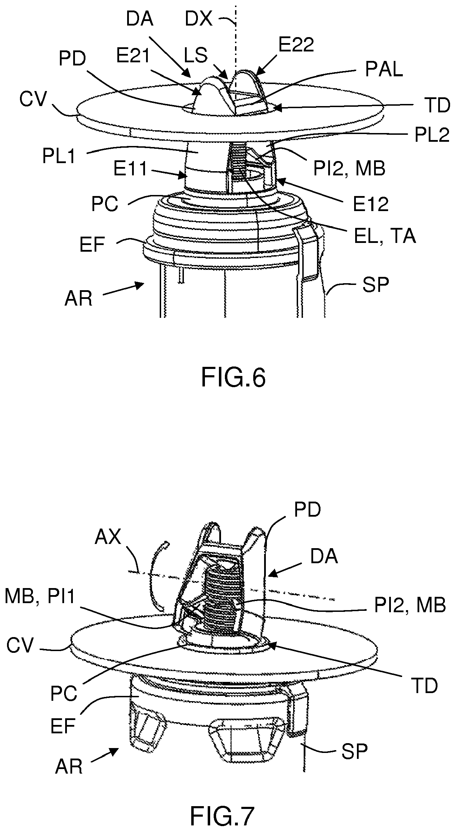

L'embout de filtrage EF est monté coulissant (suivant la direction axiale DX) sur la tige TA. C'est une pièce, par exemple en caoutchouc, éventuellement synthétique, qui est destinée à assurer le filtrage dynamique et l'étanchéité au niveau d'un trou dédié TD, défini dans la caisse CV (voir figures 6 et 7) et destiné à permettre le passage de l'extrémité libre EL de la tige TA en vue de sa solidarisation à la caisse CV. Comme il est couplé à la partie supérieure du soufflet de protection SP, par exemple par clippage, il empêche que des projections (eau ou boue) ou des poussières pénètrent à l'intérieur du soufflet de protection SP.

Comme cela apparaît mieux sur les figures 4 à 7, l'embout de filtrage EF peut être associé à une pièce de calage PC comprenant une partie annulaire destinée à être logée étroitement dans le trou dédié TD pour bien caler l'embout de filtrage EF. Cette pièce de calage PC est placée sur une extrémité supérieure de l'embout de filtrage EF, et peut, par exemple, être réalisée en matière rigide, éventuellement synthétique ou plastique ou en téflon. On notera que dans une variante de réalisation l'embout de filtrage EF pourrait comprendre cette partie annulaire destinée à être logée étroitement dans le trou dédié TD.

Le soufflet de protection SP entoure le corps CA jusque dans sa partie inférieure PI, et, comme indiqué ci-dessus est couplé à l'embout de filtrage EF. Il empêche que des projections (eau ou boue) ou des poussières atteignent le corps CA et sa tige TA.

Comme illustré sur les figures 3 à 6, le dispositif d'aide DA, selon l'invention, comprend une pièce PD comportant au moins une première extrémité E1j et des moyens de blocage MB.

La (chaque) première extrémité E1j (j=1 ou 2) est propre à appuyer sur l'embout de filtrage EF afin de constituer une butée axiale pour ce dernier (EF).

Les moyens de blocage MB sont propres à coopérer avec le filetage FT de l'extrémité libre EL de la tige TA pour immobiliser par rapport à cette extrémité libre EL la pièce PD, l'embout de filtrage EF (avec l'éventuelle pièce de calage PC) et le soufflet de protection SP non seulement avant, mais également après le retrait d'une sangle SC de conditionnement.

La pièce PD est donc couplée à l'extrémité libre EL de la tige TA de sorte que ses moyens de blocage MB coopèrent avec le filetage FT, puis, après avoir placée la tige TA dans une position rétractée dans le corps CA, on entoure l'amortisseur AR avec une sangle SC de conditionnement. Comme illustré sur la figure 2, la sangle SC constitue une boucle qui longe le corps CA sous le soufflet de protection SP et passe sous l'extrémité inférieure du corps CA et devant la face avant de l'extrémité libre EL de la tige TA, afin de maintenir cette dernière (TA) dans sa position rétractée. La (chaque) première extrémité E1j de la pièce PD appuie alors sur l'embout de filtrage EF et donc empêche ce dernier (EF) et le soufflet de protection SP de coulisser axialement vers la face avant de l'extrémité libre EL de la tige TA.

On notera qu'en présence d'une partie annulaire (destinée à être logée étroitement dans le trou dédié TD), la (chaque) première extrémité E1j de la pièce PD s'appuie sur cette partie annulaire. Dans l'exemple illustré non limitativement sur les figures 2 à 6, la (chaque) première extrémité E1j de la pièce PD s'appuie donc sur la partie annulaire de la pièce de calage PC.

Une fois l'amortisseur AR équipé de son dispositif d'aide DA et d'une sangle SC maintenant sa tige TA dans une position rétractée, il est dit « conditionné » (voir figure 2).

Comme illustré non limitativement sur les figures 2 à 7, la pièce PD peut comprendre deux parois latérales PLj (j = 1 ou 2) et une paroi de liaison PAL. Les deux parois latérales PLj sont propres à entourer deux zones de l'extrémité libre EL de la tige TA qui sont diamétralement opposées par rapport à la direction axiale DX. Par ailleurs, chaque paroi latérale PLj comprend une première extrémité E1j (propre à appuyer sur l'embout de filtrage EF), une seconde extrémité E2j opposée à sa première extrémité E1j, et une face interne qui est munie de moyens de blocage MB.

La paroi de liaison PAL relient entre elles les secondes extrémités E2j (E21 et E22) des parois latérales PLj (PL1 et PL2).

A titre d'exemple non limitatif, la pièce PD peut être réalisée par moulage d'une matière plastique, comme par exemple un polypropylène (ou PP). Mais dans une variante de réalisation la pièce PD pourrait être réalisée en métal, par exemple en aluminium ou en acier ou encore en laiton.

On notera, comme illustré non limitativement sur les figures 2 à 6, que la paroi de liaison PAL peut être avantageusement propre à être placée contre une partie terminale PAT de l'extrémité libre EL de la tige TA (qui comprend la face avant) et à définir une surface d'appui, centrée par rapport à la direction axiale DX, pour la sangle SC. On comprendra que dans ce cas la paroi de liaison PAL est intercalée entre la face avant de l'extrémité libre EL de la tige TA et la sangle SC, et donc cette dernière (SC) exerce une pression sur cette face avant via la paroi de liaison PAL lorsque l'amortisseur AR a été conditionné.

On notera également, comme illustré non limitativement sur les figures 2 à 6, que les secondes extrémités E2j des parois latérales PLj peuvent s'étendre au-delà de la paroi de liaison PAL afin de définir des butées latérales pour la sangle SC et facilite le pré-centrage dans le trou dédié TD de la caisse CV. Ainsi, les parois latérales PLj et la paroi de liaison PAL définissent avantageusement un logement LS partiellement ouvert et dans lequel peut être facilement logée une partie de la sangle SC lors de son couplage à l'amortisseur AR, sans risque de la voir glisser d'un côté ou de l'autre. En d'autres termes, cet agencement particulier facilite notablement l'installation de la sangle SC. Il est en effet rappelé que dans les amortisseurs de l'art antérieur la sangle doit être placée précisément de façon centrée sur la face avant de l'extrémité libre EL de la tige TA, afin qu'elle ne risque pas de glisser d'un côté ou de l'autre de la tige TA.

On notera également, comme illustré non limitativement sur les figures 3 et 5, que la paroi de liaison PAL peut comprendre une face interne FI destinée à être orientée vers la face avant de la partie terminale PAT de l'extrémité libre EL de la tige TA et comprenant une protubérance PR. Cette dernière (PR) est propre à être logée étroitement dans un logement ouvert LO qui est défini dans la partie terminale PAT de l'extrémité libre EL de la tige TA. Cela permet un placement précis de la pièce PD dans une position centrée par rapport à l'extrémité libre EL de la tige TA, et donc un placement précis de la sangle SC dans une position centrée par rapport à la direction axiale DX. En outre, cela facilite l'opération de couplage de la pièce PD à l'extrémité libre EL de la tige TA par le technicien qui réalise le conditionnement avec la sangle SC. Le logement ouvert LO est par exemple celui qui est dédié au vissage de la tige TA, et qui est délimité, par exemple, par six faces latérales et un fond.

Par exemple, et comme illustré non limitativement sur les figures 3 et 5, la protubérance PR peut présenter une forme semi-sphérique. On comprendra plus loin l'intérêt d'une telle forme.

On notera également, comme illustré non limitativement sur les figures 2 à 7, que les parois latérales PLj peuvent être inclinées de façon opposées en ayant leurs secondes extrémités E2j espacées d'une distance qui est strictement inférieure à la distance séparant leurs premières extrémités E1j. Cela permet avantageusement de guider le passage de la tige TA (et plus précisément de son extrémité libre EL) au travers du trou dédié TD associé qui est défini dans la caisse CV (ici représentée schématiquement par un disque), en vue de sa solidarisation à cette dernière (CV). On comprendra en effet que si l'extrémité libre EL de la tige TA se retrouve très légèrement décalée axialement par rapport au trou dédié TD associé, les inclinaisons opposées des parois latérales PLj vont permettre de la recentrer progressivement lorsque l'une de ces dernières (PLj) va entrer en contact avec la périphérie du trou dédié TD. Ainsi, un léger décalage axial ne risque plus d'empêcher la poursuite de la solidarisation du train à la caisse CV, et donc on n'est plus obligé de prévoir un technicien pour positionner précisément l'extrémité libre EL de la tige TA dans l'axe du trou dédié TD associé.

On notera également, comme illustré non limitativement sur les figures 3 à 7, que les moyens de blocage MB peuvent comprendre deux pattes Plk (k = 1 ou 2) inclinées de façons opposées afin que leurs extrémités libres respectives viennent s'appuyer sur le filet du filetage FT de l'extrémité libre EL de la tige TA, pour immobiliser la pièce PD par rapport à cette extrémité libre EL. Afin de faciliter cet appui, il est avantageux, comme illustré non limitativement sur la figure 3, que les extrémités libres de ces pattes inclinées Plk présentent une courbure sensiblement homologue de celle de l'extrémité libre EL de la tige TA.

Afin d'optimiser le couplage de la pièce PD à l'extrémité libre EL de la tige TA, il est également avantageux, comme illustré non limitativement sur les figures 3 et 4, que les pattes inclinées Plk (PI1 et PI2) soient placées sensiblement l'une en face de l'autre. Ainsi, leurs extrémités libres peuvent s'appuyer sur le filet du filetage FT en deux zones qui sont diamétralement opposées par rapport à la direction axiale DX, ce qui répartit de façon sensiblement homogène sur l'extrémité libre EL de la tige TA les forces subies par la pièce PD et exercées sur cette dernière (PD) par le soufflet de protection SP via l'embout de filtrage EF (et l'éventuelle pièce de calage PC). Un tel mode de réalisation est notamment possible lorsque les pattes inclinées Plk sont définies respectivement sur les deux parois latérales Plj diamétralement opposées, comme c'est le cas dans l'exemple illustré.

Lorsque la partie inférieure PI d'un amortisseur conditionné AR selon l'invention est solidarisée par un technicien à l'extrémité associée d'un bras BT d'un train et que ce dernier est constitué, la caisse CV est rapprochée relativement de ce train lors d'une opération de coiffage de caisse. Juste avant que les secondes extrémités E2j de la pièce PD ne parviennent au niveau du trou dédié TD associé, un technicien retire la sangle SC, par exemple en la sectionnant. Ce retrait libère la tige TA et donc lui permet de gagner progressivement une position non rétractée adaptée à sa solidarisation. La pièce PD demeurant dans sa position de couplage sur l'extrémité libre EL de la tige TA grâce à ses moyens de blocage MB, elle empêche le coulissement de l'embout de filtrage EF et du soufflet de protection SP qui lui est couplé par rapport à cette extrémité libre EL. Par conséquent, l'embout de filtrage EF ou une partie du soufflet de protection SP ne risque plus de se retrouver placé(e) en travers devant la face avant de l'extrémité libre EL de la tige TA. Puis, la forme profilée de la pièce PD (grâce aux inclinaisons opposées de ses parois latérales PLj) facilite son passage au travers du trou dédié TD. L'extrémité libre EL de la tige TA se retrouve alors avec son dispositif d'aide DA couplé de l'autre côté du trou dédié TD (voir figure 7). Il ne reste donc plus qu'à retirer (ou découpler) la pièce PD de l'extrémité libre EL de la tige TA pour que cette extrémité libre EL puisse être solidarisée par vissage à la caisse CV. Ce retrait (ou découplage) se fait alors facilement en entraînant manuellement la pièce PD en rotation autour d'un axe AX qui est sensiblement perpendiculaire à l'extrémité libre EL, comme illustré sur la figure 7. La forme semi-sphérique de la protubérance PR facilite le retrait de la pièce PD lors de son basculement autour de l'axe AX.

On notera que du fait que les premières extrémités E1j de la pièce PD s'appuient sur la partie annulaire (ici de la pièce de calage PC), cette partie annulaire se retrouve automatiquement parfaitement positionnée dans le trou dédié TD dès lors que la pièce PD est passée intégralement au travers de ce dernier (TD). On n'a donc plus besoin de prévoir un technicien pour procéder manuellement à des ajustements de position de la partie annulaire (ici de la pièce de calage PC).

La pièce PD, découplée de l'extrémité libre EL, peut être ensuite, éventuellement, réutilisée pour conditionner un autre amortisseur.

L'invention offre plusieurs avantages, parmi lesquels :
- un évitement du risque de mauvais montage de l'embout de filtrage (et de l'éventuelle pièce de calage associée),
- une mise en place aisée des extrémités libres des tiges d'amortisseurs, sans modification des opérations habituelles de coiffage de caisse ou de cette dernière,
- un conditionnement facilité des amortisseurs,
- une protection des filets de l'embout de tige de l'amortisseur.

## Revendications

1. Dispositif d'aide (DA) pour un amortisseur (AR) destiné à équiper un train de véhicule et comprenant i) un corps (CA) logeant en translation une tige (TA) ayant une extrémité libre (EL) munie d'un filetage (FT) propre à permettre sa solidarisation à une caisse (CV) dudit véhicule et maintenue dans une position rétractée par rapport audit corps (CA) par une sangle (SC), ii) un embout de filtrage (EF) monté coulissant sur ladite tige (TA), et iii) un soufflet de protection (SP) entourant ledit corps (CA) et couplé audit embout de filtrage (EF), **caractérisé en ce qu'**il comprend une pièce (PD) comprenant au moins une première extrémité (E1j) propre à appuyer sur ledit embout de filtrage (EF) et des moyens de blocage (MB) propres à coopérer avec ledit filetage (FT) pour immobiliser par rapport à ladite extrémité libre (EL) ladite pièce (PD), ledit embout de filtrage (EF) et ledit soufflet de protection (SP) avant et après un retrait de ladite sangle (SC).

2. Dispositif selon la revendication 1, **caractérisé en ce que** lesdits moyens de blocage (MB) comprennent deux pattes (Plk) inclinées de façons opposées afin que des extrémités libres qu'elles comprennent respectivement viennent s'appuyer sur un filet dudit filetage (FT) pour immobiliser ladite pièce (PD) par rapport à ladite extrémité libre (EL) de la tige (TA).

3. Dispositif selon la revendication 2, **caractérisé en ce que** lesdites pattes inclinées (Plk) sont placées sensiblement l'une en face de l'autre de manière à s'appuyer sur ledit filet en deux zones diamétralement opposées par rapport à une direction axiale (DX) de ladite tige (TA).

4. Dispositif selon l'une des revendications 1 à 3, **caractérisé en ce que** ladite pièce (PD) comprend i) deux parois latérales (PLj) propres à entourer deux zones de ladite extrémité libre (EL) diamétralement opposées par rapport à une direction axiale (DX) de ladite tige (TA), et comprenant chacune une première extrémité (E1j) propre à appuyer sur ledit embout de filtrage (EF), une seconde extrémité (E2j) opposée à ladite première extrémité (E1j), et une face interne munie desdits moyens de blocage (MB), et ii) une paroi de liaison (PAL) reliant entre elles lesdites secondes extrémités (E2j) des parois latérales (PLj).

5. Dispositif selon la revendication 4, **caractérisé en ce que** ladite paroi de liaison (PAL) est propre à être placée contre une partie terminale (PAT) de ladite extrémité libre (EL) de la tige (TA) et à définir une surface d'appui centrée par rapport à ladite direction axiale (DX) pour ladite sangle (SC).

6. Dispositif selon la revendication 5, **caractérisé en ce que** lesdites secondes extrémités (E2j) s'étendent au-delà de ladite paroi de liaison (PAL) afin de définir des butées latérales pour ladite sangle (SC).

7. Dispositif selon l'une des revendications 4 à 6, **caractérisé en ce que** ladite paroi de liaison (PAL) comprend une face interne (FI) destinée à être orientée vers une partie terminale (PAT) de l'extrémité libre (EL) de la tige (TA) et comprenant une protubérance (PR) propre à être logée étroitement dans un logement ouvert (LO) défini dans ladite partie terminale (PAT) de l'extrémité libre (EL) de la tige (TA), afin de permettre un positionnement de ladite pièce (PD) dans une position centrée par rapport à ladite extrémité libre (EL) de la tige (TA).

8. Dispositif selon la revendication 7, **caractérisé en ce que** ladite protubérance (PR) est semi-sphérique.

9. Dispositif selon l'une des revendications 4 à 7, **caractérisé en ce que** lesdites parois latérales (PLj) sont inclinées de façon opposées en ayant leurs secondes extrémités (E2j) espacées d'une distance strictement inférieure à une distance séparant leurs premières extrémités (E1j) de manière à guider le passage de ladite tige (TA) au travers d'un trou dédié (TD) défini dans ladite caisse (CV) en vue de sa solidarisation à cette dernière (CV).

10. Amortisseur (AR) destiné à équiper un train de véhicule et comprenant i) un corps (CA) logeant en translation une tige (TA) ayant une extrémité libre (EL) munie d'un filetage (FT) propre à permettre sa solidarisation à une caisse (CV) dudit véhicule et maintenue dans une position rétractée par rapport audit corps (CA) par une sangle (SC), ii) un embout de filtrage (EF) monté coulissant sur ladite tige (TA), et iii) un soufflet de protection (SP) entourant ledit corps (CA) et couplé audit embout de filtrage (EF), **caractérisé en ce que** ladite extrémité libre (EL) de la tige (TA) est munie d'un dispositif d'aide (DA) selon l'une des revendications précédentes.

## Patentansprüche

1. Hilfsvorrichtung (DA) für einen Stoßdämpfer (AR), der dazu bestimmt ist, ein Fahrzeugfahrgestell auszustatten und die i) einen Körper (CA) umfasst, der in Translation einen Schaft (TA) unterbringt, der ein freies Ende (EL) aufweist, das mit einem Gewinde (FT) versehen ist, das geeignet ist, sein festes Verbinden mit einer Karosserie (CV) des Fahrzeugs zu erlauben, und in einer eingezogenen Position bezüglich des Körpers (CA) durch einen Gurt (SC) gehalten ist, ii) einen Filteransatz (EF), der gleitend auf dem Schaft (TA) montiert ist, und iii) einen Schutzbalg (SP), der den Körper (CA) umgibt und mit dem Filteransatz (EF) gekoppelt ist, **dadurch gekennzeichnet, dass** sie ein Teil (PD) umfasst, das mindestens ein erstes Ende (E1j) umfasst, das geeignet ist, auf den Filteransatz (EF) zu drücken, und Blockierungsmittel (MB), die geeignet sind, mit dem Gewinde (FT) zusammenzuwirken, um das Teil (PD), den Filteransatz (EF) und den Schutzbalg (SP) vor und nach dem Entfernen des Gurts (SC) bezüglich des freien Endes (EL) stillzustellen.

2. Vorrichtung nach Anspruch 1, **dadurch gekennzeichnet, dass** die Blockierungsmittel (MB) zwei Pratzen (Plk) umfassen, die auf entgegengesetzte Arten geneigt sind, damit sich freie Enden, die sie umfassen, jeweils auf eine Steigung des Gewindes (FT) legen, um das Teil (PD) bezüglich des freien Endes (EL) des Schafts (TA) stillzustellen.

3. Vorrichtung nach Anspruch 2, **dadurch gekennzeichnet, dass** die geneigten Pratzen (Plk) im Wesentlichen einander gegenüberliegend platziert sind, so dass sie auf die Steigung in zwei Zonen, die einander bezüglich einer axialen Richtung (DX) des Schafts (TA) diametral entgegengesetzt sind, aufliegen.

4. Vorrichtung nach einem der Ansprüche 1 bis 3, **dadurch gekennzeichnet, dass** das Teil (PD) i) zwei Seitenwände (PLj) umfasst, die geeignet sind, um zwei Zonen des freien Endes (EL), die bezüglich einer axialen Richtung (DX) des Schafts (TA) diametral entgegengesetzt sind, zu umgeben, und jeweils ein erstes Ende (E1j) umfassen, das geeignet ist, um auf den Filteransatz (EF) zu drücken, ein zweites Ende (E2j), das dem ersten Ende (E1j) entgegengesetzt ist, und eine interne Fläche, die mit den Blockierungsmitteln (MB) versehen ist, und ii) eine Verbindungswand (PAL), die die zweiten Enden (E2j) der Seitenwände (PLj) verbindet.

5. Vorrichtung nach Anspruch 4, **dadurch gekennzeichnet, dass** die Verbindungswand (PAL) geeignet ist, gegen einen Endteil (PAT) des freien Endes (EL) des Schafts (TA) platziert zu sein und eine Auflageoberfläche, die bezüglich der axialen Richtung (DX) zentriert ist, für den Gurt (SC) zu definieren.

6. Vorrichtung nach Anspruch 5, **dadurch gekennzeichnet, dass** sich die zweiten Enden (E2j) über die Verbindungswand (PAL) hinaus erstrecken, um seitliche Anschläge für den Gurt (SC) zu definieren.

7. Vorrichtung nach einem der Ansprüche 4 bis 6, **dadurch gekennzeichnet, dass** die Verbindungswand (PAL) eine interne Fläche (FI) umfasst, die dazu bestimmt ist, zu einem Endteil (PAT) des freien Endes (EL) des Schafts (TA) ausgerichtet zu sein, und einen Vorsprung (PR) umfasst, der geeignet ist, knapp in einer offenen Aufnahme (LO), die in dem Endteil (PAT) des freien Endes (EL) des Schafts (TA) definiert ist, aufgenommen zu sein, um ein Positionieren des Teils (PD) in einer Position zu erlauben, die bezüglich des freien Endes (EL) des Schafts (TA) zentriert ist.

8. Vorrichtung nach Anspruch 7, **dadurch gekennzeichnet, dass** der Vorsprung (PR) halbkugelförmig ist.

9. Vorrichtung nach einem der Ansprüche 4 bis 7, **dadurch gekennzeichnet, dass** die Seitenwände (PLj) auf entgegengesetzte Art geneigt sind, indem ihre zweiten Enden (E2j) um einen Abstand beabstandet sind, der strikt kleiner ist als ein Abstand, der ihre ersten Enden (E1j) trennt, so dass das Durchgehen des Schafts (TA) durch eine dedizierte Bohrung (TD), die in der Karosserie (CV) definiert ist, zu ihrem festen Verbinden mit dieser Letzteren (CV), geführt wird.

10. Stoßdämpfer (AR), der dazu bestimmt ist, ein Fahrzeugfahrgestell auszustatten und i) einen Körper (CA) umfasst, der in Verschiebung einen Schaft (TA) aufnimmt, der ein freies Ende (EL) aufweist, das mit einem Gewinde (FT) versehen ist, das geeignet ist, sein festes Verbinden mit einer Karosserie (CV) des Fahrzeugs zu erlauben und in einer eingezogenen Position bezüglich des Körpers (CA) durch einen Gurt (SC) gehalten wird, ii) einen Filteransatz (EF), der gleitend auf dem Schaft (TA) montiert ist, und iii) einen Schutzbalg (SP), der den Körper (CA) umgibt und mit dem Filteransatz (EF) gekoppelt ist, **dadurch gekennzeichnet, dass** das freie Ende (EL) des Schafts (TA) mit einer Hilfsvorrichtung (DA) nach einem der vorstehenden Ansprüche versehen ist.

## Claims

1. An assistance device (DA) for a shock absorber (AR) intended to equip a vehicle axle and including i) a body (CA) holding in translation a rod (TA) having a free end (EL) provided with a threading (FT) suitable for permitting its securing to a body (CV) of said vehicle and held in a retracted position with respect to said body (CA) by a strap (SC), ii) a filtering tip (EF) mounted in a sliding manner on said rod (TA), and iii) a protective boot (SP) surrounding said body (CA) and coupled to said filtering tip (EF), **characterized in that** it includes a part (PD) including at least a first end (E1j) suitable for pressing on said filtering tip (EF) and blocking means (MB) suitable for cooperating with said threading (FT) for immobilizing said part (PD) with respect to said free end (EL), said filtering tip (EF) and said protective boot (SP) before and after a withdrawal of said strap (SC) .

2. The device according to Claim 1, **characterized in that** said blocking means (MB) include two lugs (Plk) inclined in opposite manners so that free ends which they include respectively come to bear on a thread of said threading (FT) to immobilize said part (PD) with respect to said free end (EL) of the rod (TA).

3. The device according to Claim 2, **characterized in that** said inclined lugs (Plk) are placed substantially one opposite the other so as to bear on said thread in two diametrically opposed zones with respect to an axial direction (DX) of said rod (TA).

4. The device according to one of Claims 1 to 3, **characterized in that** said part (PD) includes i) two lateral walls (PLj) suitable for surrounding two zones of said free end (EL) diametrically opposed with respect to an axial direction (DX) of said rod (TA), and each including a first end (E1j) suitable for bearing on said filtering tip (EF), a second end (E2j) opposed to said first end (E1j), and an internal face provided with said blocking means (MB), and ii) a connecting wall (PAL) connecting between them said second ends (E2j) of the lateral walls (PLj).

5. The device according to Claim 4, **characterized in that** said connecting wall (PAL) is suitable to be placed against a terminal portion (PAT) of said free end (EL) of the rod (TA) and to define a centred support surface with respect to said axial direction (DX) for said strap (SC).

6. The device according to Claim 5, **characterized in that** said second ends (E2j) extend beyond said connecting wall (PAL) so as to define lateral stops for said strap (SC).

7. The device according to one of Claims 4 to 6, **characterized in that** said connecting wall (PAL) includes an internal face (FI) intended to be oriented towards a terminal portion (PAT) of the free end (EL) of the rod (TA) and including a protuberance (PR) suitable to be housed closely in an open housing (LO) defined in said terminal portion (PAT) of the free end (EL) of the rod (TA), so as to permit a positioning of said part (PD) in a centred position with respect to said free end (EL) of the rod (TA).

8. The device according to Claim 7, **characterized in that** said protuberance (PR) is semi-spherical.

9. The device according to one of Claims 4 to 7, **characterized in that** said lateral walls (PLj) are inclined in opposed manners, having their second ends (E2j) spaced by a distance strictly less than a distance separating their first ends (E1j) so as to guide the passage of said rod (TA) through a dedicated hole (TD) defined in said body (CV) for the purpose of securing it to the latter (CV).

10. A shock absorber (AR) intended to equip a vehicle axle and including i) a body (CA) holding in translation a rod (TA) having a free end (EL) provided with a threading (FT) suitable for permitting its securing to a body (CV) of said vehicle and held in a retracted position with respect to said body (CA) by a strap (SC), ii) a filtering tip (EF) mounted in a sliding manner on said rod (TA), and iii) a protective boot (SP) surrounding said body (CA) and coupled to said filtering tip (EF), **characterized in that** said free end (EL) of the rod (TA) is provided with an assistance device (DA) according to one of the preceding claims.
